# EUROPEAN PATENT SPECIFICATION

(11) **EP 3 196 081 B1**
(45) Date of publication and mention of the grant of the patent: **08.01.2020**
(21) Application number: 16204519.9
(22) Date of filing: 15.12.2016
(51) Int. Cl.: B60S 1/52

(54) **WIPER DEVICE FOR CLEANING A VEHICLE WINDOW AND SPRAY APPARATUS**
WISCHVORRICHTUNG ZUM REINIGEN EINER FAHRZEUGSCHEIBE UND SPRÜHEINRICHTUNG
DISPOSITIF D'ESSUIE-GLACE PERMETTANT DE NETTOYER UNE VITRE DE VÉHICULE ET APPAREIL DE PULVÉRISATION

(30) Priority: 19.01.2016 DE 102016100812
(43) Date of publication of application: 26.07.2017
(73) Proprietor: Valeo Systèmes d'Essuyage, 78322 Le Mesnil Saint Denis (FR)
(72) Inventor: SCHAEUBLE, Michael, 71665 VAIHINGEN/ENZ (DE)
(74) Representative: Callu-Danseux, Violaine

(56) References cited:
- EP-A1- 1 985 513
- DE-A1-102004 007 351
- DE-A1-102012 224 474
- JP-A- 2015 223 961

## Description

### Prior art

The invention relates to a wiper device for cleaning a vehicle window according to the preamble of Claim 1. The invention further relates to a spray apparatus used in the case of a wiper device according to the invention.

A wiper device for cleaning a vehicle window according to the preamble of Claim 1 is known from DE 10 2004 007 351 A1 and from JP 2015 223961 A1. The known wiper device is distinguished by the fact that it has a spray apparatus arranged close to the end region of a wiper arm. In said document, the spray apparatus is arranged essentially within the cross section of the wiper arm, with spray nozzles penetrating the wiper arm region on the outer wall of the wiper arm in order to make it possible to apply spray liquid to the vehicle window. In addition, a wiper blade is fastened to the wiper arm and can be arrested via a through-opening which is constructed on the wiper arm and interacts with a wiper blade push-button constructed on the wiper blade adapter. Since the positioning of the spray apparatus on the wiper arm is defined given a fixed installation in or on the wiper arm and is predefined with a view to the desired orientation of the spray jets in the operating position of the wiper device, it is necessary to adapt the geometry of the wiper arm to the receptacle for the spray apparatus and also the receptacle or fastening for the wiper blade. By way of example, this results in a relatively large cross section of the end region of the wiper arm.

In addition, the prior art also discloses spray apparatuses which, in contrast to the prior art mentioned above, are not arranged within the cross section of the wiper arm, but instead can be fastened as a separate spray apparatus from the outside on the wiper arm. However, in the case of such solutions, too, the spray apparatus is always arranged fixed at a specific, unalterable position on the wiper arm.

### Disclosure of the invention

Proceeding from the prior art presented, the invention is based on the object of developing a wiper device for cleaning a vehicle window according to the preamble of Claim 1 in such a manner that a greater flexibility for geometrical design is made possible with respect to the geometrical construction of the wiper arm in the fastening region of the spray apparatus. In particular, the intention is to make it possible to construct the end region of the wiper arm, in the region of which the wiper blade is fastened and the spray apparatus is arranged, in a relatively compact manner.

According to the invention, this object is achieved in the case of a wiper device for cleaning a vehicle window with the features of Claim 1.

The invention is based on the concept of making it possible, by arranging the spray apparatus in a slidingly movable manner, to alter the position of the spray apparatus in such a manner that it is arranged at the location intended therefor in the operating position of the wiper device, i.e. as the vehicle is travelling for example, while in particular in a servicing position of the wiper arm for replacing the wiper blade, the spray apparatus can be moved to a position in which simple replacement of the wiper blade on the wiper arm is made possible. With a view to the geometrical design of the wiper arm, this makes it possible to achieve a construction of the wiper arm which allows for a wiper arm of particularly compact construction.

Advantageous developments of the wiper device according to the invention for cleaning a vehicle window are listed in the dependent claims. All combinations of at least two features disclosed in the claims, the description and/or the figures fall within the scope of the invention.

In order to make it possible for the cross section of the wiper arm to be minimized or to have the smallest possible construction, it is provided that the spray apparatus is arranged in the region of an outer wall of the wiper arm, and that the fluid connection protrudes through an opening of the outer wall. By virtue of the fact that the fluid connection protrudes through an opening in the outer wall of the wiper arm, a protected feed of the washing liquid (usually via a liquid hose) arranged within the wiper arm is additionally made possible.

In particular, the wiper arm also has a fastening apparatus for a wiper blade, wherein the fastening apparatus can be moved between an arresting position and a release position for the wiper blade. In order to make a particularly compact construction of the wiper arm possible, as stated above, it is provided in the wiper device according to the invention that the fastening apparatus and the spray apparatus are constructed as separate components, and that a connection is constructed between the spray apparatus and the opening on the outer wall of the wiper arm, which connection fixes the spray apparatus on the wiper arm in a direction on the wiper arm running perpendicularly to the outer wall. A construction of this type makes it possible to optimize both the fastening apparatus and the spray apparatus in terms of their producibility. At the same time, the connection between the spray apparatus and the wiper arm in the region of the opening ensures that the spray apparatus is held securely on the wiper arm or is slidingly movable (only) in one direction. The spray apparatus and the fastening apparatus are arranged such that they can move independently of one another in this case.

In a preferred structural development of the last-made proposal, the connection between the spray apparatus and the wiper arm is constructed as a latching connection. This allows in particular for tool-free assembly or tool-free replacement of the spray apparatus on the wiper arm.

As an alternative to a two-part or separate construction of the fastening apparatus and spray apparatus (which usually each consist of plastic), it is also possible to construct the fastening apparatus and the spray apparatus as a one-piece component. In the case of such a structural embodiment, it is not necessary in particular to secure the spray apparatus on the wiper arm by way of an additional connection or fastening. Instead, the spray apparatus is positioned or fastened on the wiper arm by means of the fastening apparatus.

It is also possible to construct the two components (fastening apparatus and spray apparatus) as separate components and to then mutually connect said components by a suitable production process, for example by an adhesive or welded connection.

In order firstly to make it possible for the spray apparatus to be slidingly movable in the longitudinal direction of the wiper arm, and secondly to avoid a movement of the spray apparatus in a direction running perpendicularly to the longitudinal direction of the wiper arm, it is provided that the opening is constructed on the wiper arm (through which the fluid connection protrudes) in the form of a slot.

A particularly simple and convenient operation of the fastening apparatus by the formation of large gripping areas (which usually consist of plastic and can be structured accordingly) is made possible because the fastening apparatus according to the invention has an essentially U-shaped cross section and overlaps the wiper arm on the upper side thereof and also two side walls. Stated in other words, this means that the fastening apparatus is arranged at least in certain regions on the outer side of the cross section of the wiper arm. A construction of this type additionally makes it possible, in a particularly simple manner, to connect the fastening apparatus to the spray apparatus.

Further advantages, features and details of the invention become apparent from the following description of preferred exemplary embodiments and also with reference to the drawing.

In the drawing:
- Figure 1 and Figure 2: each show, in a partially sectioned perspective view, a wiper device according to the invention from different perspectives,
- Figure 3: shows, in a partially sectioned side view, the wiper arm and the wiper blade as per Figures 1 and 2 in a mutually separated state,
- Figure 4 and Figure 5: show the wiper device as per Figures 1 and 2 in a partially sectioned illustration during a disassembly position and also in an operating position, and
- Figure 6 and Figure 7: show a fastening apparatus and a spray apparatus, as is provided in the case of the wiper device, in a two-piece or one-piece construction in a perspective illustration in each case.

Identical elements or elements having an identical function are provided with the same reference signs in the figures.

The figures show a wiper device 100 for cleaning a vehicle window (not shown). The wiper device 100 comprises a wiper blade 1, which is fastened replaceably on a wiper arm 5 via a wiper blade adapter 2. To this end, the wiper blade adapter 2 has a first element 3, which is assigned to the wiper blade 1, is connected to the wiper blade 1 and is connected to a second element 4 assigned to the wiper arm 5 such that it can pivot in an axis of rotation 6. The connection between the second element 4 of the wiper blade adapter 2 and the wiper blade 1 is effected by way of a fastening apparatus 10 arranged on the wiper arm 5.

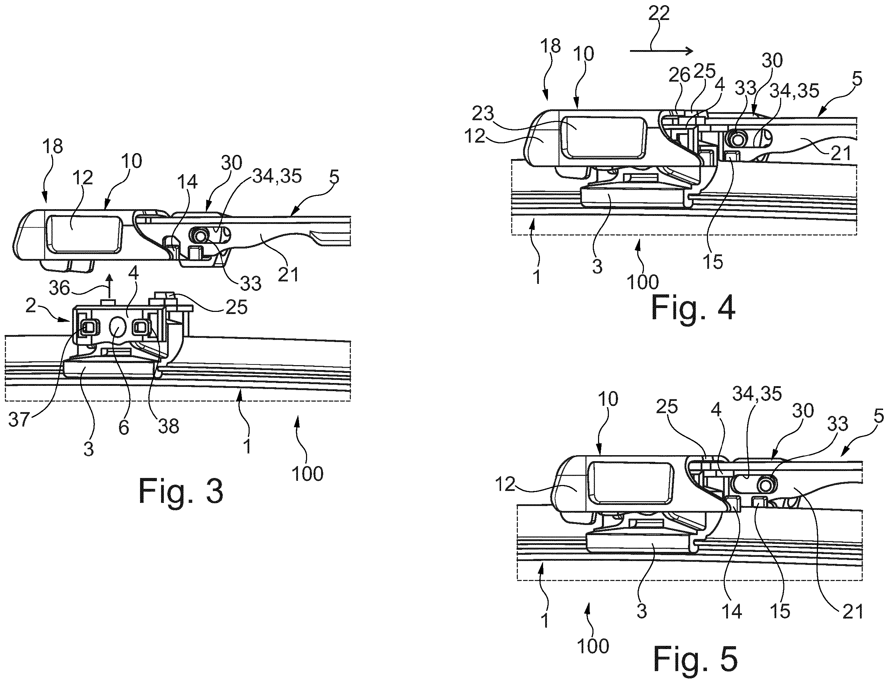

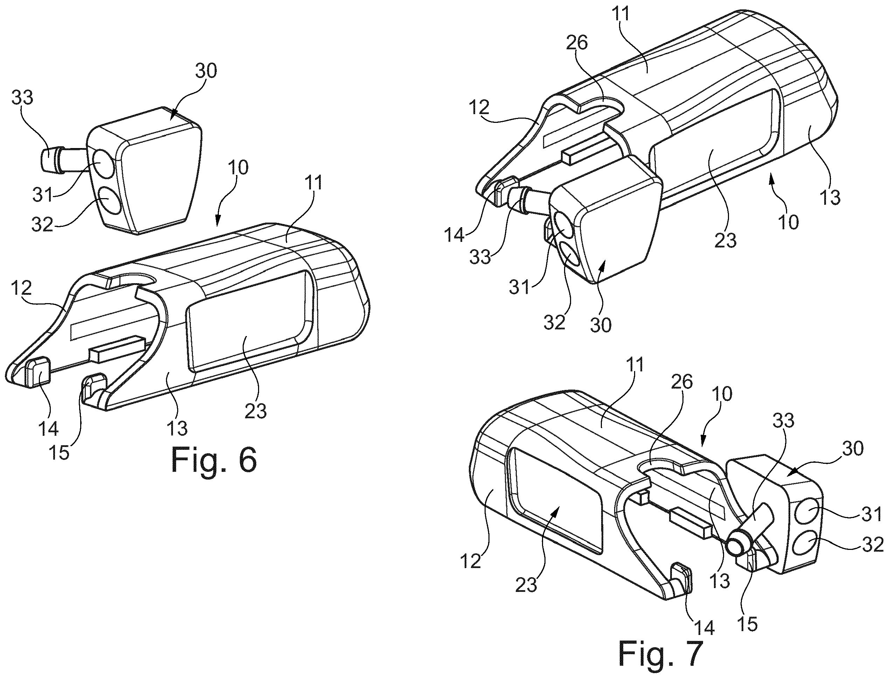

The fastening apparatus 10, which in particular is constructed as a plastics injection moulded part, has, as can be seen in particular with reference to the illustration in Figures 6 and 7, an essentially U-shaped cross section, with an upper side 11 and two side walls 12, 13 arranged in parallel and spaced apart from one another. On that side of the two side walls 12, 13 which is remote from the upper side 11, there are formed, by way of example, inwardly projecting protrusions 14, 15, which encompass the cross section of the wiper arm 5 present at the end region 18 of the wiper arm 5, said cross section at least essentially likewise having a U-shaped construction, in the region of its two parallel side walls 21. In addition, the fastening apparatus 10 surrounds the end region 18 of the wiper arm 5 on the outer side thereof. In particular, it is provided that the fastening apparatus 10, in a state mounted on the wiper arm 5, can be moved linearly in the direction of the wiper arm longitudinal axis in the region of the end region 18 between the disassembly position shown in Figure 4, in which the wiper blade 1 on the wiper arm 5 can be replaced, in the direction of the arrow 22 into the locking position shown in Figure 5, in which the wiper blade 1 is held secured on the wiper arm 5.

In the region of the two side walls 12, 13, on the outer side remote from the wiper arm 5, the fastening apparatus 10 has in each case a recessed grip 23, by way of which the fastening apparatus 10 can be gripped or moved in a particularly simple manner by an operator.

In order to make it possible to position the wiper blade 1 in a specific longitudinal position on the wiper arm 5, the wiper blade adapter 2, in the region of the second element 4 on the upper side of the second element 4, has a protrusion 25, which projects in the direction of the wiper arm 5 and protrudes in a form-fitting manner into an opening 26 open on one side and constructed on the wiper arm 5.

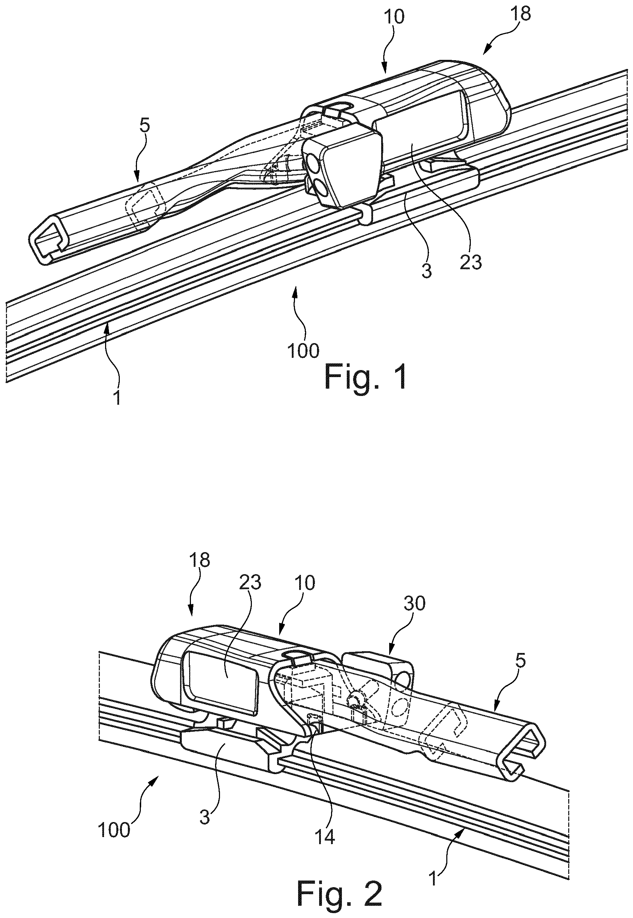

Furthermore, the wiper device 100 has a spray apparatus 30 on that side which faces a wiper axis (not shown). The spray apparatus 30 has an essentially block-shaped construction and is produced as a plastics injection moulded part. The spray apparatus 30 is arranged on the outer side of the cross section of the wiper arm 5 on one of the two side walls 21. As can be seen in particular with reference to the illustration of Figures 1 and 2 and also 6 and 7, the spray apparatus 30 has, by way of example, two spray nozzles 31, 32 arranged one above the other for spraying a spray liquid onto the vehicle window. The spray nozzles 31, 32 are supplied with the spray liquid via a fluid connection 33. The fluid connection 33, which is constructed as a fluid connector piece, penetrates a through-opening 35, which is constructed as a slot 34 and is constructed on the side wall 21 of the wiper arm 5. The fluid connection 33 is connected to a storage vessel or a pump for the spray liquid via a hose connection (not shown), which is arranged within the cross section of the wiper arm 5.

The fastening apparatus 10 and the spray apparatus 30 are mutually connected. This can be achieved either by virtue of the fact that the fastening apparatus 10 and the spray apparatus 30 are constructed as a common component, or else by virtue of the fact that the fastening apparatus 10 and the spray apparatus 30 are constructed, according to the illustration of Figure 6, as separate components, which are then combined, for example, by an adhesive bonding or welding operation to form a one-piece component, according to Figure 7. Owing to the connection between the fastening apparatus 10 and the spray apparatus 30, the spray apparatus 30 together with the fastening apparatus 10 is also arranged slidingly movable longitudinally at least between the two positions shown in Figures 4 and 5. The connection between the fastening apparatus 10 and the spray apparatus 30 has in particular the advantage that the spray apparatus 30 is positioned or fastened on the wiper arm 5 at the position correct for the application of the spray liquid in the operating position of the wiper device 100, in which the wiper blade 1 is fastened on the wiper arm 5.

It can also be provided, however, that no (integral) connection between the fastening apparatus 10 and the spray apparatus 30 is provided in the case of a separate construction of the fastening apparatus 10 and spray apparatus 30. In this case, the spray apparatus 30 is constructed in particular in such a manner that a latching connection is formed between the spray apparatus 30 and the through-opening 35 on the side wall 21 of the wiper arm 5, this latching connection allowing for the spray apparatus 30 to be longitudinally slidingly movable in the longitudinal direction of the wiper arm 5, but positioning the spray apparatus 30 in a direction running perpendicularly to the wiper arm longitudinal axis. In the case of such an embodiment of the spray apparatus 30, it is necessary to move the spray apparatus 30 in the direction of the fastening apparatus 10 for operating the wiper device 100.

For replacing a wiper blade 1 on the wiper arm 5, it is provided, according to the illustration of Figures 3 and 4, to move the fastening apparatus 10 away from the wiper arm 5. In this position, it is possible, according to the illustration of Figure 3, to move the wiper blade 1, by means of the wiper blade adapter 2, into the cross section of the wiper arm 5 or of the fastening apparatus 10 in the direction of the arrow 36 perpendicularly to the wiper arm longitudinal axis. Figure 4 shows the state in which the wiper blade 1 or the wiper blade adapter 2 has already adopted its desired position within the cross section of the wiper arm 5, in which the protrusion 25 protrudes into the opening 26. Then, the fastening apparatus 10 (together with the spray apparatus 30) is moved in the direction of the arrow 22. As a result, the fastening apparatus 10 is operatively connected to protrusions 37, 38 arranged on the outer side of the second element 4 of the wiper blade adapter 2, in such a manner that the wiper blade adapter 2 or the wiper blade 1 is fixed on the wiper arm 5 in a direction running perpendicularly to the wiper arm axis, as is shown in Figure 5. At the same time, the spray apparatus 30 moves into its operating position (in the case of a one-piece construction of the fastening apparatus 10 and spray apparatus 30 or in the case of a connection between said elements).

The wiper device 100 described in this respect can be altered or modified in a variety of ways without departing from the content of the invention as described in the appended claims.

### List of reference signs

- 1: Wiper blade
- 2: Wiper blade adapter
- 3: First element
- 4: Second element
- 5: Wiper arm
- 6: Axis of rotation
- 10: Fastening apparatus
- 11: Upper side
- 12: Side wall
- 13: Side wall
- 14: Protrusion
- 15: Protrusion
- 18: End region
- 21: Side wall
- 22: Arrow
- 23: Recessed grip
- 25: Protrusion
- 26: Opening
- 30: Spray apparatus
- 31: Spray nozzle
- 32: Spray nozzle
- 33: Fluid connection
- 34: Slot
- 35: Through-opening
- 36: Arrow
- 37: Protrusion
- 38: Protrusion
- 100: Wiper device

## Claims

1. A wiper device (100) for cleaning a vehicle window, with a spray apparatus (30) arranged preferably on an end region (18) of a wiper arm (5), whereby the spray apparatus (30) has at least one spray nozzle (31, 32) for applying a spray liquid to the vehicle window, whereby the spray apparatus (30) has a fluid connection (33), and whereby the spray apparatus (30) is arranged slidingly movable between at least two positions, the wiper device (100) comprising a fastening apparatus (10) for a wiper blade (1) arranged on the wiper arm (5), wherein the fastening apparatus (10) can be moved between an arresting position and a release position for the wiper blade (1), wherein the fastening apparatus (10) and the spray apparatus (30) are constructed as separate components, wherein a connection is constructed between the spray apparatus (30) and an opening (35) in an outer wall (21) of the wiper arm (5), which connection fixes the spray apparatus (30) on the wiper arm (5) in a direction on the wiper arm (5) running perpendicularly to the outer wall (21), **characterised in that** the fastening apparatus (10) has an essentially U-shaped cross section and overlaps the wiper arm (5) on an upper side thereof and also two side walls (21).

2. The wiper device according to Claim 1, **characterised in that** the spray apparatus (30) is arranged in the region of the outer wall (21) of the wiper arm (5), and **in that** the fluid connection (33) protrudes through the opening (35) of the outer wall (21).

3. The wiper device according to Claim 1 or 2, **characterised in that** the connection between the opening (35) of the wiper arm (5) and the spray apparatus (30) is constructed as a latching connection.

4. The wiper device according to any one of the preceding claims, **characterised in that** the fastening apparatus (10) and the spray apparatus (30) are constructed as two separate mutually connected components.

5. The wiper device according to any of the preceding claims, **characterised in that** the opening (35) is constructed on the wiper arm (5) in the form of a slot (34).

6. The wiper device according to any of the preceding claims, **characterised in that** the fastening apparatus (10) and the spray apparatus (30) are arranged on an end region (18) of the wiper arm (5) one behind the other observed in the longitudinal direction of the wiper arm (5), and **in that** the end region (18) has an accommodating area with an essentially U-shaped cross section for accommodating the wiper blade (1).

7. The wiper device according to Claim 6, **characterised in that** the spray apparatus (30) is arranged on the side facing a wiper axis.

## Patentansprüche

1. Wischvorrichtung (100) zum Reinigen einer Fahrzeugscheibe, mit einer Sprüheinrichtung (30), die vorzugsweise an einem Endbereich (18) eines Wischarms (5) angeordnet ist, wobei die Sprüheinrichtung (30) wenigstens eine Sprühdüse (31, 32) zum Aufbringen eines Reinigungsfluids auf die Fahrzeugscheibe aufweist, und wobei die Sprüheinrichtung (10) einen Fluidanschluss (33) aufweist,
und wobei die Sprüheinrichtung (30) zumindest zwischen zwei Stellungen verschiebbar angeordnet ist,
die Wischvorrichtung (100) umfasst an dem Wischarm (5) eine Befestigungseinrichtung (10) für ein Wischblatt (1) angeordnet ist, wobei die Befestigungseinrichtung (10) zwischen einer Arretierstellung und einer Lösestellung für das Wischblatt (1) beweglich ist,wobei die Befestigungseinrichtung (10) und die Sprüheinrichtung (30) als separate Bauteile ausgebildet sind, und wobei zwischen der Sprüheinrichtung (30) und der Öffnung (35) in der Außenwand (21) des Wischarms (5) eine Verbindung ausgebildet ist, die die Sprüheinrichtung (30) an dem Wischarm (5) in einer senkrecht zur Außenwand (21) verlaufenden Richtung am Wischarm (5) fixiert,
**dadurch gekennzeichnet, dass** die Befestigungseinrichtung (10) einen im Wesentlichen U-förmigen Querschnitt aufweist und den Wischarm (5) an dessen Oberseite sowie zweier Seitenwänden (21) überdeckt.

2. Wischvorrichtung nach Anspruch 1,
**dadurch gekennzeichnet,**
**dass** die Sprüheinrichtung (30) im Bereich einer Außenwand (21) des Wischarms (5) angeordnet ist, und dass der Fluidanschluss (33) durch eine Öffnung (35) der Außenwand (21) hindurchragt.

3. Wischvorrichtung nach Anspruch 1 oder 2,
**dadurch gekennzeichnet,**
**dass** die Verbindung zwischen der Öffnung (35) des Wischarms (5) und der Sprüheinrichtung (30) als Rastverbindung ausgebildet ist.

4. Wischvorrichtung nach einem der Ansprüche 1 bis 3,
**dadurch gekennzeichnet,**
**dass** die Befestigungseinrichtung (10) und die Sprüheinrichtung (30) als zwei separate, miteinander verbundene Bauteile ausgebildet sind.

5. Wischvorrichtung nach einem der Ansprüche 1 bis 4,
**dadurch gekennzeichnet,**
**dass** die Öffnung (35) am Wischarm (5) in Form eines Langlochs (34) ausgebildet ist.

6. Wischvorrichtung nach einem der Ansprüche 1 bis 5,
**dadurch gekennzeichnet,**
**dass** die Befestigungseinrichtung (10) und die Sprüheinrichtung (30) an einem Endbereich (18) des Wischarms (5) in Längsrichtung des Wischarms (5) betrachtet hintereinander angeordnet sind, und dass der Endbereich (18) einen Aufnahmebereich mit im Wesentlichen U-förmigem Querschnitt zur Aufnahme des Wischblatts (1) aufweist.

7. Wischvorrichtung nach Anspruch 6,
**dadurch gekennzeichnet,**
**dass** die Sprüheinrichtung (30) auf der einer Wischachse zugewandten Seite angeordnet ist.

## Revendications

1. Dispositif d'essuie-glace (100) pour nettoyer une fenêtre d'un véhicule, comprenant un appareil de pulvérisation (30) disposé de préférence sur une région d'extrémité (18) d'un bras d'essuie-glace (5), l'appareil de pulvérisation (30) ayant au moins une buse de pulvérisation (31, 32) pour appliquer un liquide de pulvérisation sur la fenêtre du véhicule, l'appareil de pulvérisation (30) ayant une connexion fluidique (33) et l'appareil de pulvérisation (30) étant disposé de manière à pouvoir être déplacé par coulissement entre au moins deux positions, le dispositif d'essuie-glace (100) comprenant un appareil de fixation (10) pour un balai d'essuie-glace (1) disposé sur le bras d'essuie-glace (5), l'appareil de fixation (10) pouvant être déplacé entre une position de blocage et une position de libération pour le balai d'essuie-glace (1), l'appareil de fixation (10) et l'appareil de pulvérisation (30) étant construits sous forme de composants séparés, une connexion étant établie entre l'appareil de pulvérisation (30) et une ouverture (35) dans une paroi extérieure (21) du bras d'essuie-glace (5), laquelle connexion fixe l'appareil de pulvérisation (30) sur le bras d'essuie-glace (5) dans une direction sur le bras d'essuie-glace (5) s'étendant perpendiculairement à la paroi extérieure (21), **caractérisé en ce que** l'appareil de fixation (10) a une section transversale essentiellement en forme de U et chevauche le bras d'essuie-glace (5) sur un côté supérieur de celui-ci et a également deux parois latérales (21).

2. Dispositif d'essuie-glace selon la revendication 1, **caractérisé en ce que** l'appareil de pulvérisation (30) est disposé dans la région de la paroi extérieure (21) du bras d'essuie-glace (5), et **en ce que** la connexion fluidique (33) fait saillie à travers l'ouverture (35) de la paroi extérieure (21).

3. Dispositif d'essuie-glace selon la revendication 1 ou 2, **caractérisé en ce que** la connexion entre l'ouverture (35) du bras d'essuie-glace (5) et l'appareil de pulvérisation (30) est construite sous forme de connexion par enclenchement.

4. Dispositif d'essuie-glace selon l'une quelconque des revendications précédentes, **caractérisé en ce que** l'appareil de fixation (10) et l'appareil de pulvérisation (30) sont construits sous forme de deux composants séparés connectés l'un à l'autre.

5. Dispositif d'essuie-glace selon l'une quelconque des revendications précédentes, **caractérisé en ce que** l'ouverture (35) sur le bras d'essuie-glace (5) est construite en forme de fente (34).

6. Dispositif d'essuie-glace selon l'une quelconque des revendications précédentes, **caractérisé en ce que** l'appareil de fixation (10) et l'appareil de pulvérisation (30) sont disposés sur une région d'extrémité (18) du bras d'essuie-glace (5) l'un derrière l'autre, vu dans la direction longitudinale du bras d'essuie-glace (5), et **en ce que** la région d'extrémité (18) présente une zone de réception avec une section transversale essentiellement en forme de U pour recevoir le balai d'essuie-glace (1).

7. Dispositif d'essuie-glace selon la revendication 6, **caractérisé en ce que** l'appareil de pulvérisation (30) est disposé sur le côté tourné vers un axe de l'essuie-glace.
